# EUROPÄISCHE PATENTSCHRIFT

(11) **EP 3 035 827 B1**
(45) Veröffentlichungstag und Bekanntmachung des Hinweises auf die Patenterteilung: **01.02.2017**
(21) Anmeldenummer: 15735862.3
(22) Anmeldetag: 12.06.2015
(51) Int. Cl.: A47F 3/12, F16B 12/46

(54) **GLASVITRINE MIT EINEM GLASPLATTENELEMENT MIT EINEM BEFESTIGUNGSELEMENT**
GLASS SHOWCASE WITH A GLASS PANEL ELEMENT WITH A FASTENING ELEMENT
VITRINE AVEC UNE TABLETTE EN VERRE AVEC UN ÉLÉMENT DE FIXATION

(30) Priorität: 12.06.2014 DE 102014108238
(43) Veröffentlichungstag der Anmeldung: 29.06.2016
(73) Patentinhaber: Frank, Wolfgang, 55294 Bodenheim (DE); Kurz, Thomas Matthias, 55543 Bad Kreuznach (DE)
(72) Erfinder: FRANK, Wolfgang, 55294 Bodenheim (DE)
(74) Vertreter: Katscher Habermann Patentanwälte
(86) Internationale Anmeldenummer: PCT/EP2015/063242
(87) Internationale Veröffentlichungsnummer: WO 2015/189421

(56) Entgegenhaltungen:
- DE-A1- 2 907 428
- DE-A1-102007 011 968
- DE-U1- 29 718 854

## Beschreibung

Die Erfindung betrifft eine Glasvitrine mit mindestens einem Glasplattenelement mit einem Befestigungselement, wobei das Befestigungselement einen profilierten Randstreifen zur formschlüssigen Festlegung an einem Verbindungselement aufweist, wobei das Glasplattenelement und das Befestigungselement klebend miteinander verbunden sind, wobei die Glasvitrine das dem Befestigungselement zugeordnete und daran angepasste Verbindungselement aufweist, und wobei das Glasplattenelement über das Befestigungselement lösbar mit dem Verbindungselement in einem formschlüssigen Eingriff steht.

Solche Glasplattenelemente dienen beispielsweise zum einfachen und kostengünstigen Aufbau zerlegbarer Vitrinen für Ausstellungen. Zu diesem Zweck werden die Glasplattenelemente mit Hilfe der profilierten Randstreifen und gegebenenfalls weiteren an die profilierten Randstreifen angepassten Verbindungselementen formschlüssig miteinander verbunden.

Für durchsichtige Kunststoffplatten ist in der Europäischen Patentschrift EP 1 330 173 B1 eine an einer Seitenkante der Kunststoffplatte angearbeitete Ausformung eines profilierten Randstreifens beschrieben, der formschlüssig mit einem daran angepassten ebenfalls profilstreifenförmigen Verbindungselement in Eingriff gebracht werden kann, um zwei nebeneinander angeordnete Kunststoffplatten miteinander zu verbinden. Auf den Inhalt dieser Europäischen Patentschrift EP 1 330 173 B1 und insbesondere auf die darin beschriebene Ausgestaltung der profilierten Randstreifen wird Bezug genommen. Es hat sich jedoch gezeigt, dass eine derartige Profilierung der Seitenkante einer Kunststoffplatte nur mit einem erheblichen Herstellungsaufwand ausreichend präzise möglich ist, um längere Randstreifenabschnitte durch Einschieben in das zugeordnete Verbindungselement miteinander in Eingriff bringen zu können. Zudem ist die Ausformung eines profilierten Randstreifens bei Glasplatten nicht möglich.

Zur Befestigung der Befestigungselemente an den Glasplattenelementen weisen die Befestigungselemente üblicherweise U-förmige Halterungsprofile auf, die an einer Seite des Glasplattenelements das Glasplattenelement umgreifen und klemmend mit dem Glasplattenelement in Eingriff stehen. Ein solcher Profilrahmen wird beispielsweise in der Druckschrift DE 297 18 854 U1 beschrieben. Durch die Verwendung solcher Halterungsprofile zur Befestigung des Befestigungselements mit dem Glasplattenelement wird die zur Verfügung stehende durchsichtige Fläche des Glasplattenelements um eine Breite des Halterungsprofils verringert. Zudem entsteht zwischen dem Halterungsprofil und dem Glasplattenelement eine Stufe, die ebenfalls den optischen Gesamteindruck beispielsweise einer aus Glasplattenelementen aufgebauten Vitrine stört und darüber hinaus die Reinigung des Glasplattenelements erschwert, da sich an der Stufe in besonderem Maße Schmutz ablagert.

Aus den Druckschriften DE 10 2007 011 968 A1 und DE 29 07 428 A1 sind Gefäße bzw. Aquarien bekannt, bei denen zwischen einer Seitenwand und einem Boden oder zwischen zwei Seitenwänden jeweils ein Verbindungsstück angeordnet ist, welches mit der Seitenwand und dem Boden oder mit den Seitenwänden verklebt ist.

Als Aufgabe der Erfindung wird es angesehen, die aus dem Stand der Technik bekannten Glasvitrinen so weiterzuentwickeln, dass die Glasvitrinen mit Hilfe der Glasplattenelemente formschön, einfach zu reinigend und kostengünstig hergestellt werden können und bei Bedarf wieder zerlegt und an einem anderen Ort wieder zusammengesetzt werden können.

Diese Aufgabe wird erfindungsgemäß dadurch gelöst, dass eine Dicke (D3) des Verbindungselements und des Befestigungselements kleiner als eine Dicke des dem Befestigungselement zugeordneten Glasplattenelements ist, wenn das Verbindungselement und das Befestigungselement miteinander in Eingriff stehen. Auf diese Weise wird eine filigran anmutende Verbindung der Glasplattenelemente ermöglicht und gleichzeitig die Sicht auf innerhalb der Glasvitrine ausgestellte Gegenstände lediglich geringfügig eingeschränkt.

Mit Hilfe derartiger Glasplattenelemente, welche die beschriebenen Befestigungselemente aufweisen, lassen sich in Verbindung mit den zugeordneten Verbindungselementen kostengünstig modular aufgebaute Glasvitrinen erstellen, deren einzelne Komponenten rasch und mit wenigen Handgriffen zusammengesetzt, bzw. zusammengefügt werden können. Es ist kein zusätzliches Werkzeug zum Zusammenfügen oder zur Demontage der einzelnen Glasplatten und zum Errichten der Glasvitrine erforderlich.

Die einzelnen Befestigungselemente und die damit formschlüssig in Eingriff stehenden Verbindungselemente können mit einer sehr hohen Präzision hergestellt und zusammengesetzt werden. In vielen Fällen ist eine gesonderte Abdichtung der Fugen zwischen einzelnen Befestigungselementen und den zugeordneten Verbindungselementen nicht mehr erforderlich, um einen unerwünschten Luftaustausch zwischen einem Innenraum der Glasvitrine und einer Umgebung auf ein ausreichend geringes Maß zu reduzieren.

Da die Befestigungselemente und die zugeordneten Verbindungselemente in großer Stückzahl gesondert hergestellt und je nach Bedarf mit geeigneten Glasplattenelementen verbunden werden können, ist es grundsätzlich möglich, zunächst eine individuelle Herstellung der benötigten Glasplattenelemente und eine anschließende dauerhafte Verbindung mit den notwendigen Befestigungselementen vorzunehmen, um anschließend aus den vorbereiteten Glasplattenelementen mit Hilfe der damit verbundenen Befestigungselemente und den Verbindungselementen die Glasvitrine vor Ort zusammenzusetzen.

Es ist ebenfalls möglich, bei einer Glasvitrine undurchsichtige Seitenwände, Bodenplatten oder Deckelplatten mit einzelnen erfindungsgemäßen Glasplattenelementen zu kombinieren.

Eine klebende Verbindung zwischen dem Glasplattenelement und dem Befestigungselement ist besonders einfach und kostengünstig herstellbar. Zudem ist es auf diese Weise möglich, auf das Glasplattenelement abschnittsweise umgreifende Halterungsprofile zu verzichten, wodurch eine nutzbare, durchsichtige Ansichtsfläche des Glasplattenelements erhalten bleibt.

Zweckmäßigerweise ist vorgesehen, dass das Befestigungselement mit einer Seitenfläche des Glasplattenelements klebend verbunden ist. Zu diesem Zweck kann das Befestigungselement einen Seitenstreifen aufweisen, der an einer Seitenfläche des Glasplattenelements angeordnet und klebend mit der Seitenfläche verbunden ist. Auf diese Weise werden keine das Glasplattenelement umgreifende Halteelemente zur Befestigung des Befestigungselements an dem Glasplattenelement benötigt, so dass eine optische Beeinträchtigung beispielsweise einer Vitrine durch die Befestigungselemente besonders klein ist.

Bei einer besonders vorteilhaften Ausgestaltung des erfindungsgemäßen Glasplattenelements ist vorgesehen, dass eine Dicke des Befestigungselements kleiner als eine Dicke des Glasplattenelements ist. Auf diese Weise ist es unter anderem möglich, Eckprofile zur Verbindung zweier Glasplattenelemente einzusetzen, die mit profilierten Randstreifen der Befestigungselemente in Eingriff stehen, die Befestigungselemente vollständig umgreifen und mit der durchsichtigen Fläche des Glasplattenelements flächenbündig abschließen. Auf diese Weise können besonders ansprechende und leicht zu reinigende Glasvitrinen mit Hilfe der Glasplattenelemente aufgebaut werden.

Für den Aufbau der Glasvitrine ist vorteilhafterweise vorgesehen, dass auf gegenüberliegenden Seiten des Glasplattenelements jeweils ein Befestigungselement angeordnet ist und klebend mit dem Glasplattenelement verbunden ist.

Um die Glasvitrinen beispielsweise auf einer Oberseite ebenfalls durch ein Glasplattenelement abschließen zu können ist erfindungsgemäß vorgesehen, dass auf mindestens drei Seiten des Glasplattenelements jeweils ein Befestigungselement angeordnet ist und klebend mit dem Glasplattenelement verbunden ist. Auf diese Weise können die Glasvitrinen teilweise oder vollständig aus Glasplattenelementen aufgebaut werden.

Bei einer besonders vorteilhaften Ausgestaltung des erfindungsgemäßen Glasplattenelements ist vorteilhafterweise vorgesehen, dass das Befestigungselement ein durchsichtiges Scheibenelement aufweist, wobei eine Scheibengrundfläche des Scheibenelements und eine Glasplattenelementgrundfläche des Glasplattenelements gleich sind, wobei der profilierte Randstreifen an einer Seitenfläche des Scheibenelements angeordnet ist und wobei das Scheibenelement mit einer Glasplattenelementfläche klebend verbunden ist, so dass der Randstreifen seitlich über die Glasplattenelementfläche hinausragt. Auf diese Weise steht eine besonders große Fläche zur Herstellung der klebenden Verbindung zwischen dem Befestigungselement und dem Glasplattenelement zur Verfügung.

Vorteilhafterweise wird zur Herstellung des Scheibenelements ein transparenter Kunststoff verwendet. Die zur Herstellung solcher Scheibenelemente handelsüblichen transparenten Kunststoffe weisen üblicherweise eine geringere Widerstandsfähigkeit gegen Verkratzen und gegen Reinigungsmittel auf. Daher ist ein optischer Gesamteindruck beispielsweise einer vollständig aus einem solchen transparenten Kunststoff hergestellten Vitrine nach kurzer Zeit beeinträchtigt. Andererseits sind Scheibenelemente aus transparenten Kunststoffen besonders einfach und kostengünstig herstellbar. Durch eine vollflächige Verklebung von aus einem transparenten Kunststoff hergestellten Scheibenelementen mit einer Glasplatte kann daher ein besonders langlebiges, widerstandsfähiges Glasplattenelement kostengünstig hergestellt werden.

Zweckmäßigerweise wird zur Verklebung des Befestigungselements und des Glasplattenelements ein Kleber eingesetzt, der in seinem ausgehärteten Zustand durchsichtig ist.

Um beispielsweise Vitrinen mit Hilfe von Glasplattenelementen unter Verwendung von durchsichtigen Scheibenelementen aufzubauen, ist erfindungsgemäß vorteilhafterweise vorgesehen, dass das Befestigungselement zwei profilierte Randstreifen aufweist, wobei je ein Randstreifen auf gegenüberliegenden Seiten des Scheibenelements angeordnet ist.

Um aus diesen Glasplattenelementen unter Verwendung von durchsichtigen Scheibenelementen auch beispielsweise geschlossene Glasvitrinen aufbauen zu können, ist vorteilhafterweise vorgesehen, dass das Befestigungselement mindestens drei profilierte Randstreifen aufweist.

Vorteilhafterweise ist erfindungsgemäß vorgesehen, dass das Glasplattenelement zwei Glasplatten mit gleicher Glasplattengrundfläche aufweist, wobei die Glasplatten auf gegenüberliegenden Seiten des Scheibenelements angeordnet sind und klebend mit dem Scheibenelement verbunden sind. Auf diese Weise ist das Glasplattenelement auf beiden Ansichtsseiten vor Beschädigungen beispielsweise durch Verkratzen oder durch Reinigungsmittel geschützt.

Der optische Gesamteindruck des Glasplattenelements kann erfindungsgemäß dadurch verbessert werden, dass das Befestigungselement aus dem transparenten Kunststoff hergestellt ist. Zudem können auf diese Weise bei der Verwendung von Glasplattenelementen mit Scheibenelementen die Scheibenelemente und die an den Scheibenelementen angeordneten profilierten Randstreifen einfach einstückig aus dem transparenten Kunststoff hergestellt werden. Dadurch sind die Glasplattenelemente besonders kostengünstig herstellbar. Darüber hinaus kann auf zusätzliche Verbindungselemente zwischen den profilierten Randstreifen und dem Scheibenelement verzichtet werden, wodurch die Haltbarkeit und Dauerhaftigkeit des Glasplattenelements weiter erhöht wird.

Zweckmäßigerweise sind das Scheibenelement und das Befestigungselement aus Acryl-Glas hergestellt.

Um Befestigungselemente, die mit der Seitenfläche des Glasplattenelements klebend verbunden sind, kostengünstig herzustellen ist erfindungsgemäß vorgesehen, dass das Befestigungselement aus Aluminium hergestellt ist. Aluminium ist besonders leicht und eignet sich daher im besonderen Maße zur Herstellung einer dauerhaften klebenden Verbindung mit der Seitenfläche des Glasplattenelements. Zudem ist Aluminium besonders beständig. Die Befestigungselemente können in einem Strangpressverfahren mit großer Präzision kostengünstig und in nahezu beliebiger Länge hergestellt werden.

Vorteilhafterweise ist erfindungsgemäß vorgesehen, dass der profilierte Randstreifen und das Glasplattenelement flächenbündig abschließen.

Zur Herstellung einer besonders dauerhaften klebenden Verbindung, die auch den besonderen optischen Anforderungen hinsichtlich der erforderlichen Transparenz erfüllt, ist erfindungsgemäß vorgesehen, dass ein Kleber zur Herstellung einer klebenden Verbindung zwischen dem Befestigungselement und dem Glasplattenelement transparenter Kleber ist. Zudem kann der Kleber entweder bei Raumtemperatur rasch aushärtend sein oder ein rasches Aushärten des Klebers durch Druck, durch eine erhöhte Temperatur oder durch eine anderweitige geeignete Stimulierung begünstigt und herbeigeführt werden.

Vorteilhafterweise ist vorgesehen, dass die Befestigungselemente jeweils so an den Glasplattenelementen angeordnet sind, dass die Verbindungselemente und die Glasplattenelemente an einer Außenseite der Glasvitrine jeweils flächenbündig miteinander abschließen. Erfindungsgemäß weisen die Glasplattenelemente jeweils in Stoßbereichen der durch die Befestigungselemente und die Verbindungselemente hergestellten Eckverbindungen Gehrungen auf.

Es ist grundsätzlich möglich, mit den erfindungsgemäßen Verbindungselementen und Befestigungselementen auch Glasplattenelemente mit unterschiedlichen Dicken D2 miteinander zu kombinieren und zu verbinden. Eine Glasvitrine könnte beispielsweise an einer stark beanspruchten Frontseite ein besonders dickes Glasplattenelement und an weniger beanspruchten Seitenwänden jeweils ein dünnes Glasplattenelement aufweisen.

Bei einer besonders vorteilhaften Ausgestaltung der erfindungsgemäßen Glasvitrine ist vorgesehen, dass die Dicke des Verbindungselements und des Befestigungselements in einem Bereich zwischen 7mm und 9mm liegt und vorzugsweise 8mm beträgt. Die Dicke der Glasplattenelemente herkömmlicher Glasvitrinen beträgt üblicherweise 10mm bis 20mm.

Um eine allseitig geschlossene, jedoch von allen Seiten und zumindest von oben sowie gegebenenfalls von unten transparente und optisch ansprechende Glasvitrine herzustellen kann vorgesehen sein, dass ein Bodenelement oder Deckelelement verwendet wird, das aus einem Glasplattenelement mit einem geeigneten Festlegungselement besteht, wobei das Befestigungselement eine Anschlagfläche zum Auflegen auf ein Seitenwandelement der Glasvitrine aufweist. Das Bodenelement oder Deckelelement kann zum Verschließen einer Bodenseite oder Deckelseite der Glasvitrine aufgelegt und erforderlichenfalls mit einem geeigneten lösbaren Festlegungsmittel an den angrenzenden Seitenwandelementen festgelegt werden. Bei den Festlegungsmitteln kann es sich beispielsweise um einen lösbaren Kleber handeln. Es ist ebenfalls möglich, dass die Festlegungsmittel Klemmen oder Klemmschrauben beinhalten, die vorteilhafterweise im Bereich der Befestigungselemente oder der Verbindungselemente angeordnet sind und eine kraftschlüssige Festlegung des Bodenelements oder des Deckelelements an den Seitenwandelementen der Glasvitrine ermöglichen.

Um aus mehreren kleinformatigen Glasplattenelementen eine großformatige Glasvitrine zusammensetzen zu können ist vorgesehen, dass mindestens ein Verbindungselement der Glasvitrine eine Profilschiene mit an zwei gegenüberliegenden Seiten angeordneten Profilstreifen aufweist, so dass die Profilschiene einen formschlüssigen Eingriff von zugeordneten Befestigungselementen von zwei fluchtend zueinander angeordneten Glasplattenelementen ermöglicht. Es ist ebenfalls möglich, T-förmige oder kreuzförmige Verbindungselemente vorzusehen, um aus mehreren Glasplattenelementen komplex geformte Glasvitrinen modular zusammensetzen zu können.

Vorteilhafte Ausgestaltungen des erfindungsgemäßen Glasplattenelements mit zugeordneten Befestigungselementen und Verbindungselementen werden exemplarisch anhand von in der Zeichnung dargestellten Ausführungsbeispielen näher erläutert.

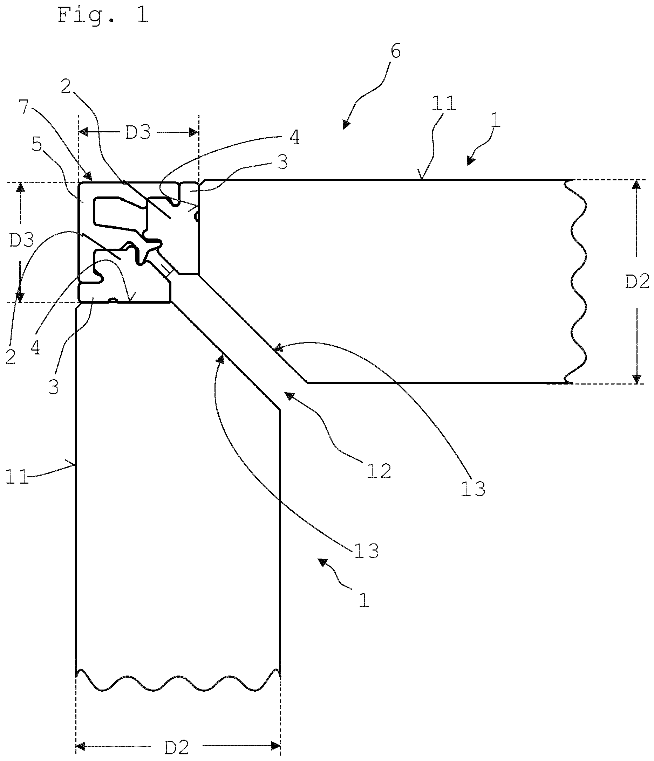

Die einzige Fig. 1 zeigt zwei schematisch dargestellte und über Befestigungselemente und ein Verbindungselement miteinander verbundene Glasplattenelemente einer Glasvitrine, wobei eine Dicke der Befestigungselemente und des Verbindungselements jeweils kleiner als die Dicke der Glasplattenelemente ist.

In Fig. 1 sind zwei Glasplattenelemente 1 mit an den jeweiligen Seitenflächen 4 klebend angeordneten Befestigungselementen 2 ausschnittsweise schematisch dargestellt. Profilierte Randstreifen 3 der Befestigungselemente 2 stehen jeweils mit einer Profilschiene 5 formschlüssig in Eingriff.

Eine Dicke D3 des Verbindungselements 5 und der Befestigungselemente 2 ist jeweils kleiner als die Dicken D2 der dem jeweiligen Befestigungselement 2 zugeordneten Glasplattenelemente 1. Die Befestigungselemente 2 sind jeweils so an den Glasplattenelementen 1 angeordnet, dass das durch die Profilschiene 5 gebildete Verbindungselement 7 und die Glasplattenelemente 1 an einer Außenseite 11 einer durch die Glasplattenelemente 1 mit weiteren nicht dargestellten Glasplattenelementen gebildeten Glasvitrine 6 jeweils flächenbündig miteinander abschließen. Die Glasplattenelemente 1 weisen jeweils in einem Stoßbereich 12 Gehrungen 13 auf. In der Darstellung sind die Glasplattenelemente 1 in dem Stoßbereich 12 beabstandet zueinander angeordnet. Es ist aber auch möglich und erfindungsgemäß vorgesehen, dass die Glasplattenelemente 1 in dem Stoßbereich 12 aneinander anliegen.

Die Dicken D2 der dem jeweiligen Befestigungselement 2 zugeordneten Glasplattenelemente 1 können unterschiedlich groß sein, so dass mit dem Verbindungselement 5 und den Befestigungselementen 2 zwei Glasplattenelemente 1 über Eck miteinander verbunden werden, die voneinander abweichende Dicken D2 (1) und D2(2) aufweisen können. Die beiden über Eck miteinander verbundenen Glasplattenelemente 1 weisen zweckmäßigerweise jeweils eine geeignete Gehrung 13 in dem Stoßbereich 12 auf.

Es ist ebenfalls möglich, bei einer aus mehreren miteinander verbundenen Glasplattenelementen gebildeten Glasvitrine 6 zu mehreren oder allen Seiten hin unterschiedliche Glasplattenelemente 1 mit jeweils einer voneinander abweichenden Dicke D2 zu verwenden. Da die Befestigungselemente 2 für Glasplattenelemente 1 mit unterschiedlicher, bzw. fast beliebiger Dicke D2 geeignet sind und verwendet werden können, können mit den gleichen Verbindungselementen 5 und Befestigungselementen 2 verschieden dicke Glasplattenelemente 1 miteinander kombiniert und zu komplexen Vitrinensystemen zusammengesetzt werden.

## Patentansprüche

1. Glasvitrine (6) mit mindestens einem Glasplattenelement (1) mit einem Befestigungselement (2), wobei das Befestigungselement (2) einen profilierten Randstreifen (3) zur formschlüssigen Festlegung an einem Verbindungselement (7) aufweist, wobei das Glasplattenelement (1) und das Befestigungselement (2) klebend miteinander verbunden sind, wobei die Glasvitrine (6) das dem Befestigungselement (2) zugeordnete und daran angepasste Verbindungselement (7) aufweist, und wobei das Glasplattenelement (1) über das Befestigungselement (2) lösbar mit dem Verbindungselement (7) in einem formschlüssigen Eingriff steht, **dadurch gekennzeichnet, dass** eine Dicke (D3) des Verbindungselements (7) und des Befestigungselements (2) kleiner als eine Dicke (D2) des dem Befestigungselement (2) zugeordneten Glasplattenelements (1) ist, wenn das Verbindungselement (7) und das Befestigungselement (2) miteinander in Eingriff stehen.

2. Glasvitrine (6) gemäß Anspruch 1, **dadurch gekennzeichnet, dass** das Befestigungselement (2) mit einer Seitenfläche (4) des Glasplattenelements (1) klebend verbunden ist.

3. Glasvitrine (6) gemäß einem der voranstehenden Ansprüche, **dadurch gekennzeichnet, dass** auf gegenüberliegenden Seiten des Glasplattenelements (1) jeweils ein Befestigungselement (2) angeordnet ist und klebend mit dem Glasplattenelement (1) verbunden ist.

4. Glasvitrine (6) gemäß einem der einem der voranstehenden Ansprüche, **dadurch gekennzeichnet, dass** auf mindestens drei Seiten des Glasplattenelements (1) jeweils ein Befestigungselement (2) angeordnet ist und klebend mit dem Glasplattenelement (1) verbunden ist.

5. Glasvitrine (6) gemäß Anspruch 1, **dadurch gekennzeichnet, dass** das Befestigungselement (2) ein durchsichtiges Scheibenelement (9) aufweist, wobei eine Scheibengrundfläche des Scheibenelements (9) und eine Glasplattenelementgrundfläche des Glasplattenelements (1) gleich sind, wobei der profilierte Randstreifen (3) an einer Seitenfläche (10) des Scheibenelements (8) angeordnet ist und wobei das Scheibenelement (9) mit einer Glasplattenelementfläche klebend verbunden ist, so dass der Randstreifen (3) seitlich über die Glasplattenelementfläche hinausragt.

6. Glasvitrine (6) gemäß Anspruch 5, **dadurch gekennzeichnet, dass** das Befestigungselement (2) zwei profilierte Randstreifen (3) aufweist, wobei je ein Randstreifen (3) auf gegenüberliegenden Seiten des Scheibenelements (9) angeordnet ist.

7. Glasvitrine (6) gemäß Anspruch 5 oder Anspruch 6, **dadurch gekennzeichnet, dass** das Glasplattenelement (1) zwei Glasplatten (8) mit gleicher Glasplattengrundfläche aufweist, wobei die Glasplatten (8) auf gegenüberliegenden Seiten des Scheibenelements (9) angeordnet sind und klebend mit dem Scheibenelement (9) verbunden sind.

8. Glasvitrine (6) gemäß einem der Ansprüche 5 bis 7, **dadurch gekennzeichnet, dass** das Scheibenelement aus einem transparenten Kunststoff hergestellt ist.

9. Glasvitrine (6) gemäß einem der voranstehenden Ansprüche, **dadurch gekennzeichnet, dass** das Befestigungselement (2) aus einem transparenten Kunststoff oder aus Aluminium hergestellt ist.

10. Glasvitrine (6) gemäß einem der voranstehenden Ansprüche, **dadurch gekennzeichnet, dass** der profilierte Randstreifen (3) und das Glasplattenelement (1) flächenbündig abschließen.

11. Glasvitrine (6) gemäß einem der voranstehenden Ansprüche, **dadurch gekennzeichnet, dass** ein Kleber zur Herstellung einer klebenden Verbindung zwischen dem Befestigungselement (2) und dem Glasplattenelement (1) ein transparenter Kleber ist.

12. Glasvitrine (6) gemäß einem der voranstehenden Ansprüche, **dadurch gekennzeichnet, dass** die Dicke (D3) des Verbindungselements (7) und des Befestigungselements (2) in einem Bereich zwischen 7mm und 9mm liegt und vorzugsweise 8mm beträgt.

13. Glasvitrine (6) gemäß einem der voranstehenden Ansprüche, **dadurch gekennzeichnet, dass** die Glasvitrine (6) ein Bodenelement oder ein Deckelelement aufweist, das aus einem Glasplattenelement (1) mit einem geeigneten Festlegungselement besteht, wobei das Festlegungselement eine Anschlagfläche zum Auflegen auf ein Seitenwandelement der Glasvitrine (6) aufweist.

14. Glasvitrine gemäß einem der voranstehenden Ansprüche, **dadurch gekennzeichnet, dass** die Glasvitrine (6) mindestens ein Verbindungselement (7) aufweist, wobei das Verbindungselement (7) eine Profilschiene (5) mit an zwei gegenüberliegenden Seiten angeordneten Profilstreifen aufweist, so dass die Profilschiene (5) einen formschlüssigen Eingriff von zugeordneten Befestigungselementen (2) von zwei fluchtend zueinander angeordneten Glasplattenelementen (1) ermöglicht.

15. Glasvitrine gemäß einem der voranstehenden Ansprüche, **dadurch gekennzeichnet, dass** die Glasvitrine (6) zwei Glasplattenelemente (1) mit voneinander abweichenden Dicken (D2) aufweist, die jeweils über ein zugeordnetes Befestigungselement (2) mit einem Verbindungselement (7) in einem formschlüssigen Eingriff stehen.

## Claims

1. Showcase (6) with at least one glass panel element (1) having a fastening element (2), the fastening element (2) comprising a profiled edge strip (3) for fixing to a connecting element (7) in a form-fit manner, the glass panel element (1) and the fastening element (2) being adhesively connected, the showcase (6) comprising the connecting element (7) assigned and adapted to the fastening element (2), and the glass panel element (1) being detachably engaged with the connecting element (7) in a form-fit manner, **characterized in that** a thickness (D3) of the connecting element (7) and the fastening element (2) is smaller than a thickness (D2) of the glass panel element (1) assigned to the fastening element (2), if the connecting element (7) engages the fastening element (2).

2. Showcase (6) according to claim 1, **characterized in that** the fastening element (2) is adhesively connected to a side surface (4) of the glass panel element (1).

3. Showcase (6) according to one of the preceding claims, **characterized in that** in each case one fastening element (2) is arranged on opposite sides of the glass panel element (1) and is adhesively connected to the glass panel element (1).

4. Showcase (6) according to one of the preceding claims, **characterized in that** in each case one fastening element (2) is arranged on at least three sides of the glass panel element (1) and is adhesively connected to the glass panel element (1).

5. Showcase (6) according to claim 1, **characterized in that** the fastening element (2) comprises a transparent pane element (9), wherein a pane base of the pane element (9) and a glass panel element base of the glass panel element (1) are identical, wherein the profiled edge strip (3) is arranged on a side surface (10) of the pane element (8) and wherein the pane element (9) is adhesively connected to a glass panel element surface, so that the edge strip (3) laterally protrudes from the glass panel element surface.

6. Showcase (6) according to claim 5, **characterized in that** the fastening element (2) comprises two profiled edge strips (3), wherein in each case one profiled edge strip (3) is arranged on opposite sides of the pane element (9).

7. Showcase (6) according to claim 5 or claim 6, **characterized in that** the glass panel element (1) comprises two glass panels (8) of the same glass panel base, wherein the glass panels (8) are arranged on opposite sides of the pane element (9) and are adhesively connected to the pane element (9).

8. Showcase (6) according to one of claims 5 to 7, **characterized in that** the pane element is made from a transparent plastic material.

9. Showcase (6) according to one of the preceding claims, **characterized in that** the fastening element (2) is made from a transparent plastic material or aluminum.

10. Showcase (6) according to one of the preceding claims, **characterized in that** the profiled edge strip (3) and the glass panel element (1) terminate in a flush manner.

11. Showcase (6) according to one of the preceding claims, **characterized in that** an adhesive for establishing an adhesive connection between the fastening element (2) and the glass panel element (1) is a transparent adhesive.

12. Showcase (6) according to one of the preceding claims, **characterized in that** a thickness (D3) of the connecting element (7) and the fastening element (2) is in the range of 7 mm to 9 mm, and preferably 8 mm.

13. Showcase (6) according to one of the preceding claims, **characterized in that** the showcase (6) comprises a bottom element or a cover element, which consists of a glass panel element (1) with a suitable securing element, wherein the securing element comprises a stop surface for butting against a side wall element of the showcase (6).

14. Showcase according to one of the preceding claims, **characterized in that** the showcase (6) comprises at least one connecting element (7), wherein the connecting element (7) comprises a profiled rail (5) with two profiled strips arranged on opposite sides, so that the profiled rail (5) enables a form-fit engagement of assigned fastening elements (2) of two aligned glass panel elements (1).

15. Showcase according to one of the preceding claims, **characterized in that** the showcase (6) comprises two glass panel elements (1) of different thicknesses (D2), which engage a connecting element (7) in a form-fit manner via in each case one assigned fastening element (2).

## Revendications

1. Vitrine en verre (6) avec au moins un élément de tablette en verre (1) avec un élément de fixation (2) dans laquelle l'élément de fixation (2) comporte une bordure profilée (3) pour la fixation par complémentarité de forme à un élément de liaison (7), dans laquelle l'élément de tablette en verre (1) est reliée par collage à l'élément de fixation (2), dans laquelle la vitrine en verre (6) comporte l'élément de liaison (7) associé et adapté à l'élément de fixation (2) et dans laquelle l'élément de tablette en verre et l'élément de liaison sont en prise de manière détachable par complémentarité de forme au moyen de l'élément de fixation (2) **caractérisé en ce qu'**une épaisseur (D3) de l'élément de liaison (7) et de l'élément de fixation (2) est inférieure à une épaisseur (D2) de l'élément de tablette en verre (1) associée à l'élément de fixation (2), si l'élément de liaison (7) et l'élément de fixation (2) sont en prise.

2. Vitrine en verre (6) selon la revendication 1, **caractérisé en ce que** l'élément de fixation (2) est relié par collage à une surface latérale (4) de l'élément de tablette en verre (1).

3. Vitrine en verre (6) selon l'une des revendications précédentes, **caractérisé en ce qu'**un élément de fixation (2) est respectivement disposé sur des côtés opposés de l'élément de tablette en verre (1) et l'élément de fixation est relié par collage à l'élément de tablette en verre (1).

4. Vitrine en verre (6) selon l'une des revendications précédentes, **caractérisé en ce qu'**un élément de fixation (2) est respectivement disposé à au moins trois côtés de l'élément de tablette en verre (1) et l'élément de fixation est relié par collage à l'élément d tablette en verre (1).

5. Vitrine en verre (6) selon la revendication 1, **caractérisé en ce que** l'élément de fixation (2) comporte un élément de vitre (9) transparent, dans lequel une surface de base de la vitre de l'élément de vitre (9) et une surface de base de l'élément de tablette en verre (1) sont identiques, dans lequel la bordure profilée (3) est disposée à une surface latérale (10) de l'élément de vitre (8) et dans lequel l'élément de vitre (9) est relié par collage à une surface de l'élément de tablette en verre de sorte que la bordure profilée (3) latéralement dépasse la surface de l'élément de tablette en verre.

6. Vitrine en verre (6) selon la revendication 5, **caractérisé en ce que** l'élément de fixation (2) comporte deux bordures profilées (3) dans lequel une bordure profilée (3) est respectivement disposée sur des côtés opposés de l'élément de vitre (9).

7. Vitrine en verre (6) selon la revendication 5 ou la revendication 6, **caractérisé en ce que** l'élément de tablette en verre (1) comporte deux tablettes en verre (8) avec une surface de base de tablette en vitre identique, dans lequel les tablettes en verre (8) sont disposées aux côtés opposants de l'élément de vitre (9) et reliées par collage à l'élément de vitre (9).

8. Vitrine en verre (6) selon l'une des revendications 5 à 7, **caractérisé en ce que** l'élément de vitre est produit à partir d'une matière plastique transparente.

9. Vitrine en verre (6) selon l'une des revendications précédentes, **caractérisé en ce que** l'élément de fixation (2) est produit à partir d'une matière plastique transparente ou d'aluminium.

10. Vitrine en verre (6) selon l'une des revendications précédentes, **caractérisé en ce que** la bordure profilée (3) et l'élément de tablette en verre (1) se terminent à fleur de la surface.

11. Vitrine en verre (6) selon l'une des revendications précédentes, **caractérisé en ce qu'**une colle pour établir une liaison par collage entre l'élément de fixation (2) et l'élément de tablette en verre (1) est une colle transparente.

12. Vitrine en verre (6) selon l'une des revendications précédentes, **caractérisé en ce que** l'épaisseur (D3) de l'élément de liaison (7) et de l'élément de fixation (2) est compris entre 7 mm et 9 mm et de préférence 8 mm.

13. Vitrine en verre (6) selon l'une des revendications précédentes, **caractérisé en ce que** la vitrine en verre (6) comporte un élément de fond ou un élément de couvercle qui se compose d'un élément de tablette en verre (1) avec un élément de localisation approprié, dans lequel l'élément de sécurisation comporte une surface d'arrêt pour appliquer sur un élément de panneau latéral de la vitrine en verre (6).

14. Vitrine en verre (6) selon l'une des revendications précédentes, **caractérisé en ce que** la vitrine en verre (6) comporte un élément de liaison (7), dans lequel l'élément de liaison (7) comporte un rail profilé (5) avec deux bandes profilées disposées à deux côtés opposés de sorte que le rail profilé (5) permet, par complémentarité de forme, la prise des éléments de fixation (2) associés de deux éléments de tablette en verre (1) disposés alignés l'un à l'autre.

15. Vitrine en verre (6) selon l'une des revendications précédentes, **caractérisé en ce que** la vitrine en verre (6) comporte deux éléments de tablette en verre (1) d'épaisseurs (D2) différents l'une par rapport à l'autre, qui sont en prise, respectivement, avec un élément de liaison (7) par complémentarité de forme en moyen d'un élément de fixation (2) associé.
